# EUROPÄISCHE PATENTSCHRIFT

(11) **EP 3 770 046 B1**
(45) Veröffentlichungstag und Bekanntmachung des Hinweises auf die Patenterteilung: **14.09.2022**
(21) Anmeldenummer: 19187837.0
(22) Anmeldetag: 23.07.2019
(51) Int. Cl.: B62D 9/00, B62D 21/18, B62D 63/02, B62D 61/10

(54) **FAHRERLOSES TRANSPORTSYSTEM**
DRIVERLESS TRANSPORT SYSTEM
SYSTÈME DE TRANSPORT SANS CONDUCTEUR

(43) Veröffentlichungstag der Anmeldung: 27.01.2021
(73) Patentinhaber: MAGNA STEYR Fahrzeugtechnik AG & Co KG, 8041 Graz (AT)
(72) Erfinder: GARTNER, Markus, 8082 Kirchbach (AT); HOLLER, Franz, 8642 St. Lorenzen (AT); KRAINER, Gottfried, 8543 St. Martin i.S. (AT); WIELAND, Christian, 8073 Feldkirchen bei Graz (AT); WIENER, Valentin, 8171 Sankt Kathrein am Offenegg (AT)
(74) Vertreter: Hoffmann Eitle

(56) Entgegenhaltungen:
- JP-A- H03 186 468
- JP-U- S62 181 415

## Beschreibung

### Gebiet der Erfindung

Die vorliegende Erfindung betrifft ein fahrerloses Transportsystem.

### Stand der Technik

Fahrerlose Transportsysteme sind an sich bekannt und dienen beispielsweise in produzierenden Unternehmen zum Transport von Bauteilen, Behältern oder sonstigem Transportgut, beispielsweise von einer Arbeitsstation zur nächsten Arbeitsstation oder von einem Lager zu einer Arbeitsstation, beispielsweise im Automobilbau.

Fahrerlose Transportsysteme weisen typischerweise ein tragendes Chassis auf und einen mit dem Chassis verbunden Aufbau, der den Transport des Transportgutes ermöglicht, beispielsweise Abstellflächen bzw. Arbeitsflächen. Zum Fahren weisen die Transportsysteme typischerweise von einem Motor, beispielsweise Elektromotor, angetriebene Räder auf und oft auch zusätzliche, nicht-angetriebene Stützräder.

Beispielsweise kann ein solches Transportsystem zentralliegende Antriebsräder aufweisen und mittels vier in den Ecken angebrachten Rollen gestützt sein. Die vier Stützrollen sind dann üblicherweise an einem chassisfesten Bauteil drehbar gelagert. Dokument JP H03 186468 A beispielsweise offenbart ein fahrerloses Transportsystem gemäß dem Oberbegriff des Patentanspruchs 1.

Bei derartigen Fahrzeugen kann es durch die Gegebenheiten des Untergrundes (Löcher, Rillen, Unebenheiten) vorkommen, dass die Antriebsräder Bodenkontakt verlieren, da sich das Fahrzeug auf den fest montierten Rädern abstützt.

Ein ähnliches Verhalten kann bei Steigungen auftreten. Je größer der Steigungswinkel und die Distanz zwischen vorderen und hinteren Stützrädern, desto größer ist die Wahrscheinlichkeit, dass die Antriebsräder den Bodenkontakt verlieren.

Da alle Räder fest mit dem Chassis verbunden sind, teilt sich das Gesamtgewicht bei ebener Fahrbahn auf alle, beispielsweise sechs Räder auf. Sobald der Untergrund uneben ist, kann dieses Gleichgewicht gestört werden und zu einer Verringerung der Haftreibung an den Antriebsrädern führen. Dies kann ein Durchdrehen der Räder verursachen.

Durch die üblichen Fahrwerksgeometrien ist es zudem nicht möglich, Erschütterungen, die über den Untergrund aufgenommen werden, auszugleichen. Die starr montierten Stützräder nehmen die Schläge ungedämpft auf und geben diese an das Chassis des Fahrzeugs ab. Dadurch können Beschädigungen sowohl an der Hardware des Fahrzeugs, als auch am Transportgut entstehen.

### Zusammenfassung der Erfindung

Es ist eine Aufgabe der Erfindung, ein fahrerloses Transportsystem in dieser Hinsicht zu verbessern und insbesondere ein fahrerloses Transportsystem anzugeben, bei welchem die Antriebsräder auch bei Bodenunebenheiten und Steigungen dauerhaft Bodenkontakt haben und das Erschütterungen besser ausgleichen bzw. dämpfen kann.

Die Lösung der Aufgabe erfolgt durch ein fahrerloses Transportsystem, umfassend ein Chassis, Antriebsräder und Stützräder, wobei an einer ersten Seite des Chassis und an einer der ersten Seite gegenüberliegenden zweiten Seite des Chassis jeweils eine in Längsrichtung angeordnete erste und zweite Pendelachse an einem jeweils zugeordneten ersten und zweiten Verbindungspunkt schwenkbar mit dem Chassis verbunden ist, wobei an einem Ende der Pendelachsen jeweils ein Antriebsrad und am gegenüberliegenden Ende der Pendelachsen jeweils ein Stützrad angeordnet ist, wobei das fahrerlose Transportsystem zusätzlich eine in Querrichtung angeordnete dritte Pendelachse aufweist, die quer zu den beiden in Längsrichtung angeordneten ersten und zweiten Pendelachsen ausgerichtet ist und die ebenfalls an einem zugeordneten dritten Verbindungspunkt mit dem Chassis schwenkbar verbunden ist, wobei an beiden Enden der in Querrichtung angeordneten Pendelachse ein Stützrad angeordnet ist. Die erste, zweite und dritte Pendelachse sind baulich integriert, sodass alle Räder des Transportsystems auf drei Verbindungspunkten und dem Chassis verbunden sind.

Erfindungsgemäß werden zwei Pendelachsen verwendet zur Lagerung jeweils eines Antriebsrades und eines Stützrades. Die Ausrichtung dieser Pendelachsen, und somit der hintereinander angeordneten Antriebs- und Stützräder, definiert gewissermaßen die Längsachse des Transportsystems. Eine gewöhnliche Vorwärtsbewegung des Transportfahrzeuges erfolgt in Richtung dieser "in Längsrichtung angeordneten" Pendelachsen. Durch die Verbindung jeweils eines Antriebsrades mit einem Stützrad über eine eigene zugeordnete Pendelachse kann jedes Antriebsrad Bodenkontakt haben, auch bei unebenen und steilen Bodenflächen.

Eine weitere eigene Pendelachse ist für zwei zusätzliche Stützräder vorgesehen und verläuft quer zu beiden anderen Pendelachsen, also im Wesentlichen als Verbindung der beiden in Längsrichtung angeordneten Pendelachsen und bevorzugt normal auf diese. Auch diese beiden Stützräder haben hierdurch auch bei Bodenunebenheiten Bodenkontakt.

Für den Antrieb des Transportsystems ist die Verwendung der beiden Antriebsräder ausreichend. Jedoch können in weiteren Ausführungsformen der Erfindung auch manche oder alle der als "Stützräder" bezeichneten Räder angetrieben sein.

Durch die geometrische Anordnung der drei Pendelachsen - eine in Querachse und zwei in Längsrichtung - kann gewährleistet werden, dass die Antriebsräder und auch die Stützräder bei üblichen Bodenverhältnissen dauerhaft Bodenkontakt haben. Auch können durch diese Anordnung Erschütterungen ausgeglichen werden, was sich positiv auf die Lebensdauer der Hardware auswirkt. Zusätzlich ist das Transportgut auf Grund der erreichten Dämpfung, gegen Beschädigungen oder ungewolltes Verrutschen durch Vibrationen geschützt.

Die Anordnung der drei Pendelachsen, eine in Querrichtung, bevorzugt an der Front des Fahrzeugs, und zwei in Längsrichtung, kann das Transportfahrzeug je nach Auslegung typischerweise Unebenheiten und Steigungen bis 7 % bewältigen, ohne dass die Antriebsräder den Bodenkontakt verlieren.

Weiterbildungen der Erfindung sind in den abhängigen Ansprüchen, der Beschreibung sowie den beigefügten Zeichnungen angegeben.

Vorzugsweise sind, zumindest in einem Normalbetrieb bei einer Bewegung des Transportsystems in einer Vorwärtsrichtung, die beiden in Längsrichtung angeordneten Pendelachsen parallel zueinander ausgerichtet.

Die in Querrichtung angeordnete Pendelachse ist bevorzugt normal auf die beiden in Längsrichtung angeordneten Pendelachsen ausgerichtet.

Die in Querrichtung angeordnete Pendelachse liegt bevorzugt in der Front des Transportsystems und bildet somit eine Frontachse des Transportsystems.

Bevorzugt sind die Antriebsräder der in Längsrichtung angeordneten Pendelachsen jeweils an demjenigen Ende der Pendelachsen angeordnet, welches näher der in Querrichtung angeordneten Pendelachse liegt. Die Antriebsräder befinden sich bevorzugt in Nähe der Mitte des Transportfahrzeuges in Längsrichtung.

Bevorzugt bilden die vier Stützräder der drei Pendelachsen ein Rechteck.

Vorzugsweise weist das Chassis eine Rechteckform auf. Dabei ist der Sonderfall quadratisch von der Bestimmung "Rechteckform" umfasst.

Die vier Stützräder liegen vorzugsweise in den Ecken des Chassis bzw. des Transportfahrzeuges.

Vorzugsweise liegen die jeweiligen Verbindungspunkte, an welchen die in Längsrichtung angeordneten Pendelachsen schwenkbar mit dem Chassis verbunden sind, näher am jeweiligen Antriebsrad der Pendelachse als am jeweiligen Stützrad der Pendelachse. Die Verbindungspunkte können auch in der Mitte der jeweiligen Pendelachse liegen.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines nicht erfindungsgemäßen fahrerlosen Transportsystems von unten.
- Fig. 2a und 3a: sind schematische Darstellungen eines nicht erfindungsgemäßen fahrerlosen Transportsystems in verschiedenen Fahrsituationen von der Seite.
- Fig. 4a: ist eine schematische Darstellung eines nicht erfindungsgemäßen fahrerlosen Transportsystems in einer weiteren Fahrsituation von vorne.

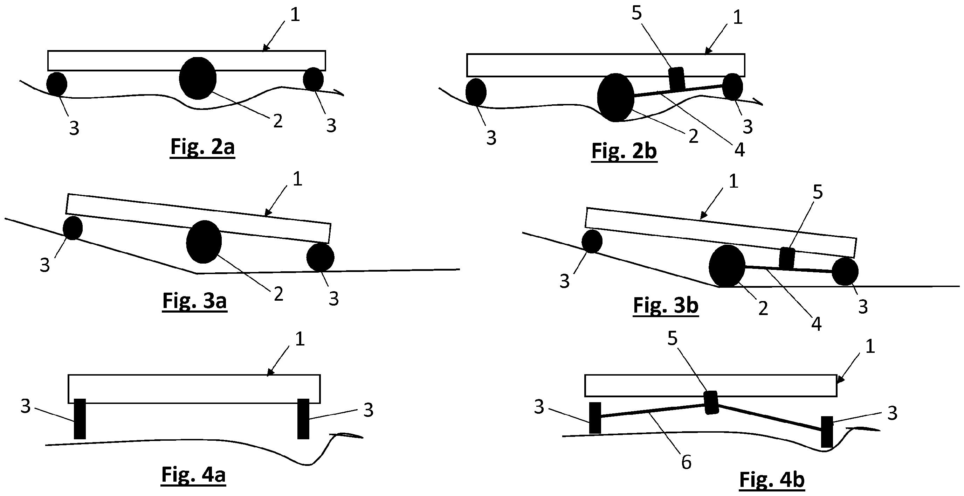

- Fig. 2b und 3b: sind schematische Darstellungen eines erfindungsgemäßen fahrerlosen Transportsystems in den Fahrsituationen gemäß Fig. 2a und 2b von der Seite.
- Fig. 4b: ist eine schematische Darstellung eines erfindungsgemäßen fahrerlosen Transportsystems in der weiteren Fahrsituation gemäß Fig. 4a von vorne.

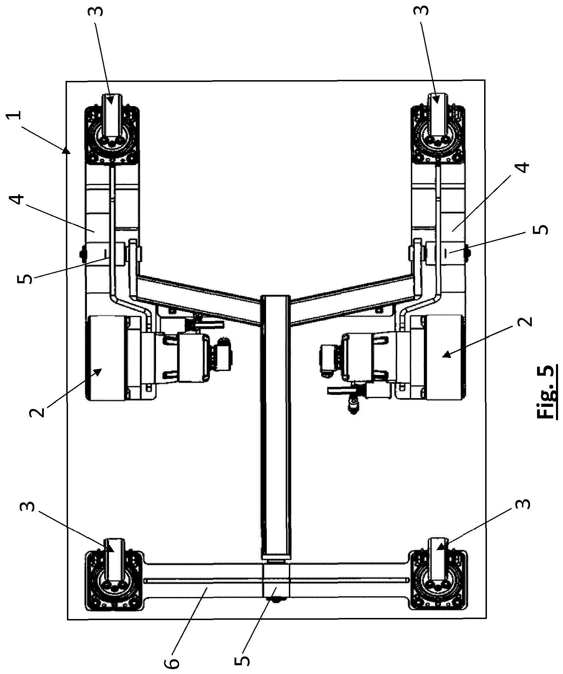

- Fig. 5: ist eine schematische Darstellung eines erfindungsgemäßen fahrerlosen Transportsystems von unten.

### Detaillierte Beschreibung der Erfindung

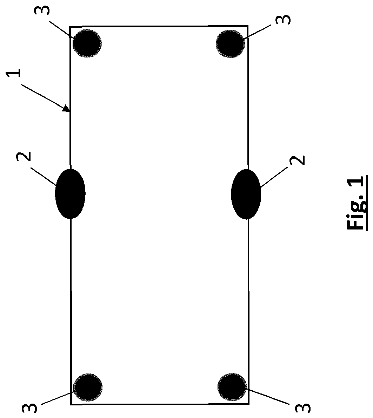

In Fig. 1 ist ein nicht erfindungsgemäßes fahrerloses Transportsystem von unten dargestellt.

Das Transportsystem der Fig. 1 umfasst ein Chassis 1, an welchem zwei zentral liegende Antriebsräder 2 seitlich und in Längsrichtung des Transportsystems mittig angeordnet sind. Zusätzlich verfügt das Transportsystem über vier Stützräder 3 bzw. Stützrollen, die in den Ecken des Transportsystems angeordnet sind. Die Antriebsräder 2 und die Stützräder 3 sind mit dem Chassis 1 fest verbunden.

Das nicht erfindungsgemäße Transportsystem der Fig. 1 ist in den Fig. 2a und 3a von der Seite und in der Fig. 4a von vorne in unterschiedlichen problematischen Fahrsituationen dargestellt.

Zum Vergleich ist ein erfindungsgemäßes Fahrzeug in den Fig. 2b, 3b und 4b in den selben Fahrsituationen jeweils von der selben Seite her gesehen dargestellt.

Die vorteilhafte Wirkung eines erfindungsgemäßen Fahrwerks bzw. Transportsystems wird durch die Kombination der 3 Pendelachsen 4, 6 erreicht. Die vordere, in Querrichtung angeordnete Pendelachse 6 und die hinteren, in Längsrichtung angeordneten Pendelachsen 4 werden in den Fig. 2b, 3b und 4b zunächst separat betrachtet und danach das Zusammenspiel erklärt.

In den Fig. 2 und 3, die den Stand der Technik mit der neu entwickelten Fahrwerkgeometrie vergleichen, sieht man das optimierte Fahrverhalten, welches durch die hinteren Pendelachsen 4 erreicht wird.

Der Hinterachse ist es dadurch möglich, Bodenveränderungen auszugleichen (siehe Fig. 2a und 2b) und vertikale Bewegungen auszuführen. Dadurch wird ein dauerhafter Bodenkontakt aller Räder 2, 3, sowie eine Dämpfung von Erschütterungen erreicht. Auch können mithilfe der Fahrwerksgeometrie größere Steigungen (siehe Fig. 3a und 3b), ohne ein frühzeitiges Aufsitzen der Stützräder 3 bzw. ohne Verlust des Bodenkontakts der Antriebsräder 2, bewältigt werden.

Auch in der Fig. 4 wird der Stand der Technik (Fig. 4a) mit der neuen Fahrwerkgeometrie (Fig. 4b) der Vorderachse verglichen. Bodenunebenheiten wie Löcher können durch das an der Vorderseite zentral gelagerte Fahrwerk (Fig. 4b) ausgeglichen werden. Die Pendelachse 6 ermöglicht den Stützrädern 3, eine vertikale Bewegung durchzuführen und somit in das Loch der Fahrbahn einzutauchen. Das gegenüberliegende Stützrad 3 bleibt dabei am Boden. Im Vergleich dazu würde bei einer starren Vorderachse oder bei fix montierten Stützrädern 3 das Antriebsrad 2 nicht in das Loch eintauchen, sondern den Bodenkontakt verlieren (Fig. 4a). Daraus würde ein instabiles Fahrverhalten resultieren. Auch kleine Unebenheiten oder Objekte, die sich am Fahrweg befinden, würden ungedämpft an das Chassis des Fahrzeugs weitergegeben. Klarstellend sei hier noch erwähnt, dass die Pendelachse 6, welche die beiden Stützräder 3 verbindet, vorzugsweise als ein starres Element ausgeführt ist.

Nur durch die Kombination der Anordnung der drei Pendelachsen 4 und 6 in einem fahrerlosen Transportsystem ist es möglich, bei Steigungen oder unebenen Fahrwegen, eine dauerhafte Bodenhaftung mit allen Rädern 2, 3 zu gewährleisten. Zusätzlich wird eine Dämpfung ohne die Verwendung von Stoßdämpfern realisiert.

Ein erfindungsgemäßes fahrerloses Transportsystem - wie zum Beispiel in Fig. 5 von oben dargestellt - umfasst daher ein Chassis 1, Antriebsräder 2 und Stützräder 3, wobei an einer ersten Seite des Chassis 1 und an einer der ersten Seite gegenüberliegenden zweiten Seite des Chassis 1 jeweils eine in Längsrichtung angeordnete Pendelachse 4 an einem jeweils zugeordneten Verbindungspunkt 5 schwenkbar mit dem Chassis 1 verbunden ist, wobei an einem Ende der Pendelachsen 4 jeweils ein Antriebsrad 2 und am gegenüberliegenden Ende der Pendelachsen 4 jeweils ein Stützrad 3 angeordnet ist, wobei das fahrerlose Transportsystem zusätzlich eine in Querrichtung angeordnete Pendelachse 6 aufweist, die quer zu den beiden in Längsrichtung angeordneten Pendelachsen 4 ausgerichtet ist und die ebenfalls an einem zugeordneten Verbindungspunkt 5 mit dem Chassis 1 schwenkbar verbunden ist, wobei an beiden Enden der in Querrichtung angeordneten Pendelachse 6 jeweils ein Stützrad 3 angeordnet ist.

Die beiden in Längsrichtung angeordneten Pendelachsen 4 sind parallel zueinander ausgerichtet und die in Querrichtung angeordnete Pendelachse 6 ist normal auf die beiden in Längsrichtung angeordneten Pendelachsen 4 ausgerichtet.

Die Antriebsräder 2 der in Längsrichtung angeordneten Pendelachsen 4 sind jeweils an demjenigen Ende der Pendelachsen 4 angeordnet, welches näher der in Querrichtung angeordneten Pendelachse 6 liegt, also im Transportsystem "vorne" und somit in Fahrzeuglängsrichtung näher an der Mitte des Fahrzeuges.

Die in Querrichtung angeordnete Pendelachse 6 liegt in der Front des Transportsystems und bildet somit eine Frontachse des Transportsystems. Die in Längsrichtung angeordneten Pendelachsen 4 bilden die Hinterachse des Transportsystems.

Das Chassis 1 weist eine Rechteckform auf.

Die vier Stützräder 3 der drei Pendelachsen 4, 6 bilden zusammen ein Rechteck.

Die vier Stützräder 3 liegen in den Ecken des Chassis 1.

Die jeweiligen Verbindungspunkte 5, an welchen die in Längsrichtung angeordneten Pendelachsen 4 schwenkbar mit dem Chassis 1 verbunden sind, liegen näher am jeweiligen Antriebsrad 2 der Pendelachse 4 als am jeweiligen Stützrad 3 der Pendelachse 4.

Durch die erfindungsgemäße bauliche Integration von drei Pendelachsen 4, 6 in einem fahrerlosen Transportsystem können, wie beschrieben, bessere Eigenschaften in Bezug auf das Fahrverhalten des Transportsystems erreicht werden. Es werden drei Achsen 4, 6 verwendet und die Räder 2, 3, also alle Räder des Transportsystems, sind auf drei Punkten - nämlich den Verbindungspunkten 5 - mit dem Chassis 1 verbunden. Dadurch wird gewährleistet, dass gewöhnlich immer alle (sechs) Räder am Boden/Untergrund aufliegen. Ein Abheben eines Rades wäre nur in Extremsituationen möglich bzw. erst dann möglich, wenn die Fahrbahnlöcher so tief sind, dass der baulich bzw. mechanisch mögliche Höhen-/Ausgleichshub der Pendelachsen überschritten wird. In der Praxis könnte das beispielsweise dann geschehen, wenn das Eintauchen des einen Rades in eine tiefe Fahrbahnunebenheit ein so starkes Auslenken des auf der gegenüberliegenden Seite der Pendelachse angeordneten Rades nach oben verursachen würde, dass dieses gegenüberliegende Rad bereits an das meist darüber angeordnete Chassis anstößt.

Durch die Pendelachsen 4, 6 können sowohl die Antriebsräder 2 als auch die Stützräder 3 eine senkrechte Bewegung in beide Richtungen durchführen und dadurch unter gewöhnlichen Bedingungen Unebenheiten am Fahrweg ausgleichen. Nur durch die Kombination der drei Pendelachsen, ist dieses Fahrverhalten möglich.

### Bezugszeichenliste

- 1: Chassis
- 2: Antriebsrad
- 3: Stützrad
- 4: in Längsrichtung angeordnete Pendelachse
- 5: Verbindungspunkt
- 6: in Querrichtung angeordnete Pendelachse

## Patentansprüche

1. Fahrerloses Transportsystem, umfassend ein Chassis (1), Antriebs-räder (2) und Stützräder (3),
wobei an einer ersten Seite des Chassis (1) und an einer der ersten Seite gegenüberliegenden zweiten Seite des Chassis (1) jeweils eine in Längsrichtung angeordnete erste und zweite Pendelachse (4) an einem jeweils zugeordneten ersten und zweiten Verbindungspunkt (5) schwenkbar mit dem Chassis (1) verbunden ist, an einem Ende der Pendelachsen (4) jeweils ein Antriebsrad (2) und am gegenüberliegenden Ende der Pendelachsen (4) jeweils ein Stützrad (3) angeordnet ist, das fahrerlose Transportsystem zusätzlich eine in Querrichtung angeordnete dritte Pendelachse (6) aufweist, die quer zu den beiden in Längsrichtung angeordneten ersten und zweiten Pendelachsen (4) ausgerichtet ist und die ebenfalls an einem zugeordneten dritten Verbindungspunkt (5) mit dem Chassis (1) schwenkbar verbunden ist, an beiden Enden der in Querrichtung angeordneten Pendelachse (6) ein Stützrad (3) angeordnet ist, **dadurch gekennzeichnet dass** die erste, zweite und dritte Pendelachse (4, 6) baulich integriert sind, dass alle Räder des Transportsystems auf drei Verbindungspunkten (5) und dem Chassis verbunden sind.

2. Fahrerloses Transportsystem nach Anspruch 1,
**dadurch gekennzeichnet, dass**, zumindest in einem Normalbetrieb bei einer Bewegung des Transportsystems in einer Vorwärtsrichtung, die beiden in Längsrichtung angeordneten Pendelachsen (4) parallel zueinander ausgerichtet sind und/oder die in Querrichtung angeordnete Pendelachse (6) normal auf die beiden in Längsrichtung angeordneten Pendelachsen (4) ausgerichtet ist.

3. Fahrerloses Transportsystem nach zumindest einem der vorhergehenden Ansprüche,
**dadurch gekennzeichnet, dass** die Antriebsräder (2) der in Längsrichtung angeordneten Pendelachsen (4) jeweils an demjenigen Ende der Pendelachsen (4) angeordnet sind, welches näher der in Querrichtung angeordneten Pendelachse (6) liegt.

4. Fahrerloses Transportsystem nach zumindest einem der vorhergehenden Ansprüche,
**dadurch gekennzeichnet, dass** die in Querrichtung angeordnete Pendelachse (6) in der Front des Transportsystems liegt und somit eine Frontachse des Transportsystems bildet.

5. Fahrerloses Transportsystem nach zumindest einem der vorhergehenden Ansprüche,
**dadurch gekennzeichnet, dass** die vier Stützräder (3) der drei Pendelachsen (4, 6) ein Rechteck bilden.

6. Fahrerloses Transportsystem nach zumindest einem der vorhergehenden Ansprüche,
**dadurch gekennzeichnet, dass** das Chassis (1) eine Rechteckform aufweist.

7. Fahrerloses Transportsystem nach Anspruch 6,
**dadurch gekennzeichnet, dass** die vier Stützräder (3) in den Ecken des Chassis (1) liegen.

8. Fahrerloses Transportsystem nach zumindest einem der vorhergehenden Ansprüche,
**dadurch gekennzeichnet, dass** die jeweiligen Verbindungspunkte (5), an welchen die in Längsrichtung angeordneten Pendelachsen (4) schwenkbar mit dem Chassis (1) verbunden sind, näher am jeweiligen Antriebsrad (2) der Pendelachse (4) liegen als am jeweiligen Stützrad (3) der Pendelachse (4).

## Claims

1. Driverless transport system, comprising a chassis (1), drive wheels (2) and support wheels (3),
wherein, on a first side of the chassis (1) and on a second side of the chassis (1) opposite the first side of the chassis (1), a first and second floating axle (4), arranged in the longitudinal direction, is in each case connected in a swivelling manner to the chassis (1) at a respectively assigned first and second connection point (5), a drive wheel (2) is in each case arranged at one end of the floating axles (4) and a support wheel (3) is in each case arranged at the opposite end of the floating axles (4), the driverless transport system has in addition a third floating axle (6), arranged in the transverse direction, which is aligned transversely to the two first and second floating axles (4) arranged in the longitudinal direction and which is also connected in a swivelling manner to the chassis (1) at an assigned third connection point (5), a support wheel (3) is arranged at both ends of the floating axle (6) arranged in the transverse direction, **characterised in that** the first, second and third floating axles (4, 6) are structurally integrated, that all wheels of the transport system are connected to three connection points (5) and the chassis.

2. Driverless transport system according to claim 1, **characterised in that**, at least in normal operation, when the transport system moves in a forward direction, the two floating axles arranged in the longitudinal direction (4) are aligned parallel to each other and/or the floating axle arranged in the transverse direction (6) is aligned normally to the two floating axles arranged in the longitudinal direction (4).

3. Driverless transport system according to at least one of the preceding claims, **characterised in that** the drive wheels (2) of the floating axles arranged in the longitudinal direction (4) are in each case arranged at the end of the floating axles (4) which is closer to the floating axle (6) arranged in the transverse direction.

4. Driverless transport system according to at least one of the preceding claims, **characterised in that** the floating axle (6) arranged in the transverse direction is located in the front of the transport system and thus forms a front axle of the transport system.

5. Driverless transport system according to at least one of the preceding claims, **characterised in that** the four support wheels (3) of the three floating axles (4, 6) form a rectangle.

6. Driverless transport system according to at least one of the preceding claims, **characterised in that** the chassis (1) is rectangular in form.

7. Driverless transport system according to claim 6, **characterised in that** the four support wheels (3) are located in the corners of the chassis (1).

8. Driverless transport system according to at least one of the preceding claims, **characterised in that** the respective connection points (5) at which the floating axles arranged in the longitudinal direction (4) are connected in a swivelling manner to the chassis (1) are closer to the respective drive wheel (2) of the floating axle (4) than to the respective support wheel (3) of the floating axle (4).

## Revendications

1. Système de transport sans conducteur, comprenant un châssis (1), des roues d'entraînement (2) et des roues d'appui (3),
dans lequel au niveau d'un premier côté du châssis (1) et au niveau d'un second côté opposé au premier côté du châssis (1) respectivement un premier et deuxième essieu oscillant (4) agencés dans le sens longitudinal au niveau d'un premier et deuxième point de liaison (5) respectivement associés sont reliés de manière pivotante au châssis (1), respectivement une roue d'entraînement (2) est agencée au niveau d'une extrémité des essieux oscillants (4) et respectivement une roue d'appui (3) est agencée au niveau de l'extrémité opposée des essieux oscillants (4), le système de transport sans conducteur présente en outre un troisième essieu oscillant (6) agencé dans le sens transversal qui est orienté transversalement aux deux premier et deuxième essieux oscillants (4) agencés dans le sens longitudinal et qui est relié de manière pivotante aussi au niveau d'un troisième point de liaison (5) associé au châssis (1), une roue d'appui (3) est agencée au niveau des deux extrémités de l'essieu oscillant (6) agencé dans le sens transversal, **caractérisé en ce que** les premier, deuxième et troisième essieux oscillants (4, 6) sont intégrés dans la construction, que toutes les roues du système de transport sont reliées sur trois points de liaison (5) et le châssis.

2. Système de transport sans conducteur selon la revendication 1,
**caractérisé en ce qu'**au moins dans un fonctionnement normal lors d'un mouvement du système de transport dans un sens vers l'avant, les deux essieux oscillants (4) agencés dans le sens longitudinal sont orientés parallèlement l'un à l'autre et/ou l'essieu oscillant (6) agencé dans le sens transversal est orienté perpendiculairement sur les deux essieux oscillants (4) agencés dans le sens longitudinal.

3. Système de transport sans conducteur selon au moins l'une quelconque des revendications précédentes,
**caractérisé en ce que** les roues d'entraînement (2) des essieux oscillants (4) agencés dans le sens longitudinal sont agencées respectivement à l'extrémité des essieux oscillants (4) qui se trouve plus près de l'essieu oscillant (6) agencé dans le sens transversal.

4. Système de transport sans conducteur selon au moins l'une quelconque des revendications précédentes,
**caractérisé en ce que** l'essieu oscillant (6) agencé dans le sens transversal se trouve en face du système de transport et forme ainsi un essieu avant du système de transport.

5. Système de transport sans conducteur selon au moins l'une quelconque des revendications précédentes,
**caractérisé en ce que** les quatre roues d'appui (3) des trois essieux oscillants (4, 6) forment un rectangle.

6. Système de transport sans conducteur selon au moins l'une quelconque des revendications précédentes,
**caractérisé en ce que** le châssis (1) présente une forme rectangulaire.

7. Système de transport sans conducteur selon la revendication 6,
**caractérisé en ce que** les quatre roues d'appui (3) se trouvent dans les angles du châssis (1).

8. Système de transport sans conducteur selon au moins l'une quelconque des revendications précédentes,
**caractérisé en ce que** les points de liaison (5) respectifs, au niveau desquels les essieux oscillants (4) agencés dans le sens longitudinal sont reliés de manière pivotante au châssis (1), se trouvent plus près de la roue d'entraînement (2) respective de l'essieu oscillant (4) que de la roue d'appui (3) respective de l'essieu oscillant (4).
